# EUROPEAN PATENT APPLICATION

(11) **EP 3 116 103 A1**
(43) Date of publication of application: **11.01.2017**
(21) Application number: 16177899.8
(22) Date of filing: 05.07.2016
(51) Int. Cl.: H02K 1/27, H02K 15/03

(54) **METHOD FOR MANUFACTURING A ROTARY ELECTRIC MACHINE ROTOR AND ROTARY ELECTRIC MACHINE ROTOR**

(30) Priority: 09.07.2015 JP 2015137949
(71) Applicant: Toyota Jidosha Kabushiki Kaisha, Toyota-shi, Aichi-ken, 471-8571 (JP)
(72) Inventor: HATTORI, Hiroyuki, Toyota-shi, Aichi-ken,, 471-8571 (JP)
(74) Representative: Winter, Brandl, Fürniss, Hübner, Röss, Kaiser, Polte - Partnerschaft mbB

(57) **Abstract**

A method for manufacturing a rotary electric machine rotor (10) includes: forming core block elements (12); inserting magnets (30) in corresponding one of magnet holes (15); forming magnet core blocks (11) by injecting a molten resin (46) into each of the magnet holes (15) from above the magnet (30), solidifying the molten resin (46), and thereby forming a resin portion (31) so as to integrate each of the core block elements (12) and the magnets (30), the molten resin (46) is injected at a second end surface (A2; B2), and end surfaces of the magnets being exposed on a first end surface (A1; B1); forming the rotary electric machine rotor (10) by stacking and integrating plural magnet core blocks (11), the plural magnet core blocks (11) being stacked such that the first end surfaces (A1; B1) of two magnet core blocks (11) that are disposed at both ends in an axial direction constitute end surfaces at both ends of the rotary electric machine rotor (10) in the axial direction.

## Description

### BACKGROUND

### 1. Field

The present invention relates to a method for manufacturing a rotary electric machine rotor, which includes magnet core blocks and in which the plural magnet core blocks are integrated, each of the magnet core blocks being formed by integrating a magnet and a core block element that is made of a magnetic material. The present invention further relates to a corresponding rotary electric machine rotor.

### 2. Description of Related Art

Conventionally, a configuration of a rotary electric machine rotor that uses a rotor core made of a magnetic material has been known. A rotor, in which magnet holes that penetrate in an axial direction are formed at plural positions of the rotor core in a circumferential direction and a magnet is disposed in each of the magnet holes, has also been known. In order to reduce core loss of the magnet, there is a case where the magnets, which are disposed at the plural circumferential positions, are each disposed separately as the plural magnets in the axial direction of the rotor in such a configuration.

In JP 2007-282358 A, it is described to form a stacked body by stacking plural core plates that are made of electromagnetic steel sheets and to form plural magnet holes around a shaft hole at the center of the stacked body. A magnet is inserted in each of the magnet holes, a portion above each of the magnets and a periphery of each of the magnets are filled with a resin member, and the magnets and the stacked body are integrated, so as to form a magnet core block. Then, the rotor is formed by stacking and fixing the plural magnet core blocks.

JP 2007-215357 A discloses a configuration, in which the plural magnets are inserted in the magnet hole of the rotor core in such a way that the magnets are aligned in the axial direction. In this configuration, in order to promote an inflow of a resin between the plural magnets, a chamfering portion or a counterbore portion is formed at an inner end of each of the magnets.

In a process of forming the magnet core block as in the method for manufacturing the rotor described in JP 2007-282358 A, the portion above the magnet is filled with the resin member. Thus, a resin portion in the magnet hole is largely exposed to an outer side at an end of a resin injection side of the magnet core block. Accordingly, in a state where the rotor is formed by stacking the magnet core blocks, a surface of the resin portion in the magnet hole is largely exposed to the outer side at one end in the axial direction of the rotor. In such a configuration, there is a possibility that stress is generated in the resin portion by repeated excess temperature changes during use of the rotor or by rotation of the rotor and the resin portion is cracked. For example, a thermal expansion difference is generated between the magnet and the resin portion during a temperature increase. Thereafter, the excess stress is generated in the resin portion for covering the magnet at a position near a core end surface due to a temperature decrease. As a result, the resin portion is possibly cracked. If the cracked resin portion is scattered peripherally during the rotation of the rotor, it may lead to performance degradation of peripheral parts or a degraded force of the resin portion for fixing the magnet. Meanwhile, as for the rotor that is manufactured by the method for manufacturing described in JP 2007-215357 A, cracking of the resin portion can be suppressed. However, the resin is injected in a state where the two magnets are separated to both sides in the axial direction within the magnet hole, and thus the positions of the magnets have to be managed highly accurately. As a result, there is a possibility that productivity is decreased and manufacturing cost is increased.

### SUMMARY

The present invention provides a method for manufacturing a rotary electric machine rotor for realizing a structure that can achieve favorable productivity and suppress scattering of a resin portion in the rotary electric machine rotor in which plural magnets are disposed separately in an axial direction.

A method for manufacturing a rotary electric machine rotor according to the present invention includes: forming core block elements that are made of a magnetic material, each of the core block elements has a shaft hole at the center and plural magnet holes around the shaft hole. Furthermore, the method for manufacturing includes: inserting magnets in corresponding one of the magnet holes, an axial length of each of the magnets is shorter than an axial length of each of the magnet holes. Moreover, the method for manufacturing includes: forming magnet core blocks by injecting a molten resin into each of the magnet holes from above the magnet, solidifying the molten resin, and thereby forming a resin portion so as to integrate each of the core block elements and the magnets, each of the magnet core block elements has axial end surfaces that are first end surface and a second end surface, the first end surface is on an opposite side from the second end surface, the molten resin is injected at the second end surface, and end surfaces of the magnets being exposed on the first end surface. Furthermore, the method for manufacturing includes: forming a rotor by stacking and integrating a plural magnet core blocks such that center axes correspond to each other, the plural core blocks being stacked such that the first end surfaces of the two magnet core blocks that are disposed at both ends in an axial direction constitute end surfaces at both ends of the rotor in the axial direction.

According to the method for manufacturing a rotary electric machine rotor according to the present invention, the plural magnet core blocks are stacked and integrated such that, in the two magnet core blocks that are disposed at both of the ends of the rotor in the axial direction, the end surfaces on exposing sides of the magnets constitute the end surfaces at both of the ends of the rotor in the axial direction. In addition, ends on resin injection sides of the two magnet core blocks at both ends are disposed on an inner side of the rotor in the axial direction. In this way, favorable productivity of the rotor, in which the plural magnets are disposed separately in the axial direction, can be achieved, and a structure capable of suppressing scattering of the resin portion can be realized.

According to the method for manufacturing a rotary electric machine rotor, each resin portion in each of the magnet holes may have a resin surface at the second end surface.

According to the method for manufacturing a rotary electric machine rotor, the resin surface may have an inner portion that is apart from a wall surface of the each of the magnet holes, and the inner portion may be recessed inward in an axial direction from the second end surface of the core block element.

The method for manufacturing a rotary electric machine rotor may further comprise the step of forming each core block element by stacking plural core plates. Preferably, the plural core plates may be made of a steel sheet as the magnetic material.

The method for manufacturing a rotary electric machine rotor may further comprise the steps of forming each core plate by punching the steel sheet, preferably having a thickness of 0.5 mm or smaller, in an annular shape; and forming each core plate with a shaft hole at the center and the plural peripheral magnet holes by the punching.

The method for manufacturing a rotary electric machine rotor may further comprise the steps of forming the shaft hole of the core block element by connecting the shaft holes of the plural core plates in the axial direction; and forming the plural magnet holes of the core block element by connecting the plural magnet holes of the plural core plates in the axial direction.

The method for manufacturing a rotary electric machine rotor may further comprise the steps of integrating the magnet and the core block element by filling a portion above the magnet and a periphery of the magnet in the magnet hole with the resin portion.

Another aspect of the present invention relates to a rotary electric machine rotor comprising plural magnet core blocks that are stacked and integrated such that center axes correspond to each other, wherein each of the magnet core blocks is formed by core block elements and magnets, the core block elements being made of a magnetic material and each of the core block elements having a shaft hole at the center and plural magnet holes around the shaft hole, the magnets being inserted in corresponding one of the magnet holes and an axial length of each of the magnets being shorter than an axial length of each of the magnet holes; a portion above the magnet and a periphery of the magnet in the magnet hole are filled with a resin portion; each of the magnet core blocks has axial end surfaces that are a first end surface and a second end surface, the first end surface being on an opposite side from the second end surface, the molten resin being injected at the second end surface, and end surfaces of the magnets being exposed on the first end surface; and the plural magnet core blocks are stacked such that the first end surfaces of two magnet core blocks that are disposed at both ends in an axial direction constitute end surfaces at both ends of the rotary electric machine rotor in the axial direction.

### BRIEF DESCRIPTION OF THE DRAWINGS

Features, advantages, and technical and industrial significance of exemplary embodiments of the present invention will be described below with reference to the accompanying drawings, in which like numerals denote like elements, and wherein:
FIG. 1 is a cross-sectional view of a rotary electric machine that includes a rotary electric machine rotor manufactured by a method for manufacturing of an embodiment according to the present invention;
FIG. 2 is a cross-sectional view of the rotary electric machine rotor manufactured by the method for manufacturing of the embodiment according to the present invention;
FIG. 3A is a cross-sectional view that shows the method for manufacturing the rotary electric machine rotor shown in FIG. 2;
FIG. 3B is a cross-sectional view that shows the method for manufacturing the rotary electric machine rotor shown in FIG. 2;
FIG. 3C is a cross-sectional view that shows the method for manufacturing the rotary electric machine rotor shown in FIG. 2;
FIG. 3D is a cross-sectional view that shows the method for manufacturing the rotary electric machine rotor shown in FIG. 2;
FIG. 4 is a cross-sectional view of a rotary electric machine rotor manufactured by another example of the method for manufacturing of the embodiment according to the present invention; and
FIG. 5 is a cross-sectional view of a half portion of a magnet core block that is formed in a process of forming the magnet core block in the other example of the method for manufacturing of the embodiment according to the present invention.

### DETAILED DESCRIPTION OF EMBODIMENTS

A description will hereinafter be made on an embodiment of the present invention by using the drawings. Shapes, materials, and number of units, which will be described below, are merely illustrative and can appropriately be changed in accordance with a specification of a rotary electric machine. In the case where plural embodiments, modified examples, and the like are provided in the following description, those can appropriately be combined and implemented. In the following description, equivalent components are denoted by the same reference numeral in all of the drawings. In addition, in the description of this section, reference numerals that are mentioned earlier are used upon necessary.

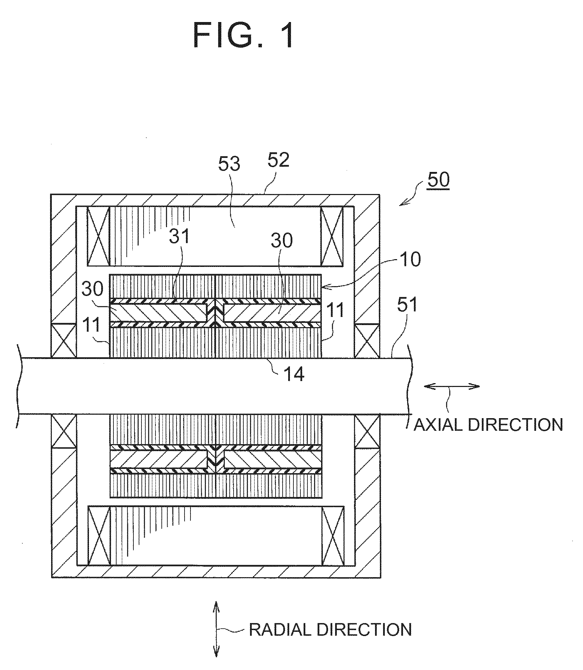

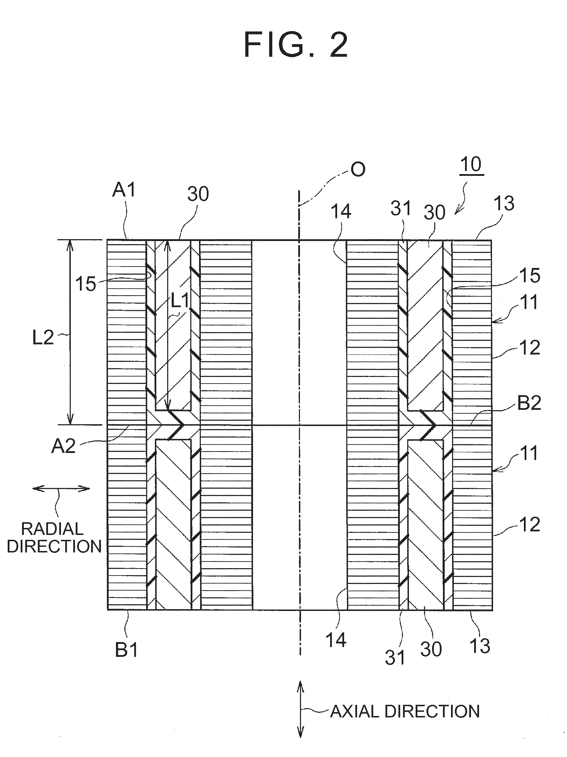

FIG. 1 is a cross-sectional view of a rotary electric machine 50 that includes a rotary electric machine rotor 10 manufactured by a method for manufacturing of the embodiment. FIG. 2 is a cross-sectional view of the rotary electric machine rotor 10 manufactured by the method for manufacturing of the embodiment.

The rotary electric machine rotor 10 is used to form the rotary electric machine 50. For example, the rotary electric machine 50 is a synchronous motor with a magnet that is driven by a three-phase AC current. For example, the rotary electric machine 50 is used as a motor for driving a hybrid vehicle, as a generator, or as a motor generator that has functions of both of those. The rotary electric machine rotor 10 will hereinafter be described as the rotor 10.

The rotor 10 is a cylindrical member and is formed by stacking and integrating two magnet core blocks 11. During use of the rotor 10, a rotary shaft 51 is inserted in and fixed to the rotor 10. In a state where the rotor 10 is disposed in a case 52, the rotary shaft 51 is rotatably supported at both ends by the case 52. In the case 52, a cylindrical stator 53 is fixed on a radially outer side of the rotor 10. The rotary electric machine 50 is formed in this way.

As shown in FIG. 2, each of the magnet core blocks 11, which form the rotor 10, includes a cylindrical core block element 12 and magnets 30 as plural permanent magnets that are fixed to the core block element 12. The core block element 12 is a stacked body that is formed by stacking plural core plates 13, the core plate 13 being made of a steel sheet as a magnetic material. A shaft hole 14 is formed at the center of the core block element 12, and plural magnet holes 15 are formed around the shaft hole 14. The magnet hole 15 has a rectangular shape when seen from one side in an axial direction. The plural magnet holes 15 are disposed along a circumferential direction of the core block elements 12 at regular intervals.

The core plate 13 is formed by punching the thin steel sheet with a thickness of 0.5 mm or smaller, for example, in an annular shape. The core plate 13 is formed with a shaft hole at the center and plural peripheral magnet holes by the punching. The core block element 12 is formed by stacking the plural core plates 13, the number of which is set in advance. The shaft hole 14 of the core block element 12 is formed by connecting the shaft holes of the plural core plates 13 in the axial direction. The plural magnet holes 15 of the core block element 12 are formed by connecting the plural magnet holes of the plural core plates 13 in the axial direction. The magnet 30 is inserted in each of the magnet holes 15.

The magnet 30 is in an axially elongated cuboid shape, and a magnetization direction thereof corresponds to a radial direction of the rotor 10. An axial length L1 of each of the magnets 30 is shorter than an axial length L2 of the magnet hole 15. In a state where the magnet 30 is disposed in the magnet hole 15, the magnet hole 15 is filled with a resin, and the resin is solidified. In this way, the core block element 12 and the magnet 30 are integrated. A resin portion 31, in which the resin is solidified, fixes the magnet 30 in the magnet hole 15.

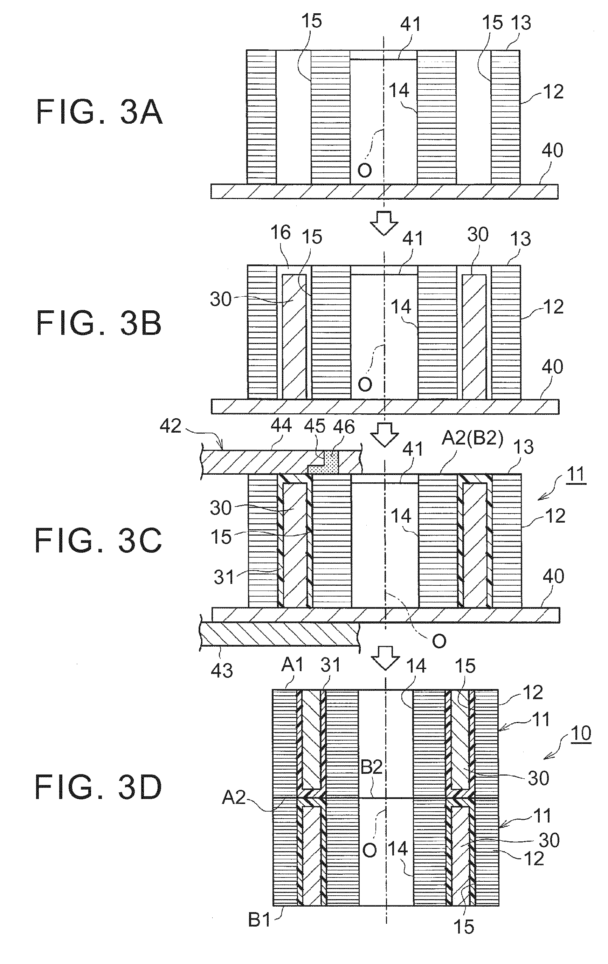

A thermosetting resin can be used as the resin portion 31, and a molten resin 46 (see FIG. 3C) as a resin material that is melted by heating is injected into the magnet hole 15 from the above and is hardened. In this way, a portion above the magnet 30 and a periphery of the magnet 30 in the magnet hole 15 are filled with the resin portion 31. Then, the magnet 30 and the core block element 12 are integrated, and the magnet core block 11 is formed.

The rotor 10 is formed by stacking and integrating the two magnet core blocks 11, which are formed as described above, in the axial direction. At this time, the shaft holes 14 of the core block elements 12 are connected in the axial direction. The rotary shaft 51 (FIG. 1) of the rotary electric machine 50 is inserted in the connected shaft hole 14. The plural magnet holes 15 of the one core block element 12 respectively correspond to those of the other core block element 12. Here, paired magnet holes 15 of the core block element 12 may be disposed at plural circumferential positions of the core block element 12, and the two magnet holes 15 in each of the pairs may be disposed in a substantially V shape.

The two magnet core blocks 11 are disposed at both ends of the rotor 10 in the axial direction. The two magnet core blocks 11 are integrated such that first end surfaces A1, B1 on sides where the magnets 30 are exposed constitute end surfaces at both of the ends of the rotor 10 in the axial direction. More specifically, of the two magnet core blocks 11, the first end surface A1 on the exposing side of the magnet 30 of the one magnet core block 11, which is disposed at one of the ends (an upper end in FIG. 2) of the rotor 10 in the axial direction, constitutes the one end surface (an upper end surface in FIG. 2) of the rotor 10 in the axial direction. Meanwhile, the first end surface B1 on the exposing side of the magnet 30 of the other magnet core block 11, which is disposed at the other end (a lower end in FIG. 2) of the rotor 10 in the axial direction, constitutes the other end surface (a lower end surface in FIG. 2) of the rotor 10 in the axial direction. In this way, as will be described below, fixation of the magnets 30 is facilitated, and favorable productivity can thereby be achieved. In addition, the rotor 10 that can suppress scattering of the resin portion 31 can be realized. Furthermore, in the rotor 10, the two magnets 30 that are aligned in the axial direction are disposed separately from each other in the axial direction via the resin portions 31. Thus core loss, as eddy current loss of the magnets 30, can be suppressed.

The method for manufacturing the rotor 10 will be described in further detail by using FIG. 3A to FIG. 3D. FIG. 3A to FIG. 3D are cross-sectional views that show the method for manufacturing the rotor 10 in process order. As shown in FIG. 3A, as a process of forming the core block element 12, first, the specified plural number of the core plates 13 that are formed by punching the magnetic steel sheets are stacked and placed on a conveyance tray 40. At this time, positions of the shaft holes 14 and the magnet holes 15 of the plural core plates 13 are respectively arranged to correspond to each other. In addition, the core plates 13 are positioned on the conveyance tray 40 by fitting a guide shaft 41 that is vertically provided on an upper surface of the conveyance tray 40 into the shaft holes 14 of the plural core plates 13. In this way, the core block element 12 is formed of the plural core plates 13. The shaft holes 14 of the plural core plates 13 are connected in the axial direction, and the shaft hole 14 of the core block element 12 is formed. In addition, the magnet holes of the plural core plates 13 are connected in the axial direction, and the magnet holes 15 of the core block element 12 are formed. At this time, an axial groove (not shown) may be formed in a circumferential portion of an inner circumferential surface of the shaft hole of each of the core plates 13. In addition, a projection (not shown) that extends in the axial direction may be formed in a circumferential portion of an outer circumferential surface of the guide shaft 41. Then, this projection may be engaged with the groove of each of the core plates 13. In this way, the core plates 13 may be positioned in the circumferential direction.

Next, as shown in FIG. 3B, as a process of inserting the magnets 30 in the magnet holes 15, the magnet 30 is inserted from the above into each of the magnet holes 15 of the core block element 12. In this state, the axial length of the magnet 30 is shorter than that of the magnet hole 15. In this way, an upper end surface of the magnet 30 in the magnet hole 15 is positioned lower than an upper end surface of the core block element 12. As a result, an upper space 16 that will be filled with the resin is formed on the upper side of the magnet 30 in the magnet hole 15.

Thereafter, in a state where the core block element 12 and the magnets 30 are placed on the conveyance tray 40, the core block element 12 and the magnets 30 are conveyed to a resin injection device 42 (FIG. 3C) by a conveyance member (not shown). The resin injection device 42 includes a lower mold 43 and an upper mold 44. The lower mold 43 can be lifted or lowered, and the conveyance tray 40 is placed thereon. The lower mold 43 has a heating portion (not shown) that heats the conveyance tray 40 from a lower side thereof. Meanwhile, the upper mold 44 can be lifted or lowered and is pressed against the core block element 12 from the above. A resin reservoir 45 that accommodates a resin raw material is provided in the upper mold 44. FIG. 3C only shows a left-side portion of the resin injection device 42. In a process of forming the magnet core block 11, the molten resin 46 that is heated and melted in the resin reservoir 45 is pressurized from the above by a plunger (not shown) and is pushed out to a bottom portion of the upper mold 44. The molten resin 46, which has been pushed out, flows along a resin channel formed by the upper surface of the core block element 12 and the bottom portion of the upper mold 44, and is injected into the magnet hole 15 from above the magnet 30. After being injected to the portion above the magnet 30 and the periphery of the magnet 30 in the magnet hole 15, the resin is heated by the heating portion of the lower mold 43. In this way, the resin in the magnet hole 15 is solidified through hardening, and the resin portion 31 is formed. Then, as shown in FIG. 3C, the core block element 12 and the magnets 30 are integrated, and the magnet core block 11 is formed. At this time, the resin does not enter a portion below a lower end surface of the magnet 30. Accordingly, in a state where the magnet core block 11 is taken out of the resin injection device 42, the end surface of the magnet 30 is exposed to the lower side at the lower end of the magnet core block 11 in FIG. 3C that is an opposite end from the resin injection side thereof.

Next, as shown in FIG. 3D, the two magnet core blocks 11, which are formed as described above, are prepared. As a process of forming the rotor 10, the two magnet core blocks 11 are stacked and integrated in the axial direction such that center axes O of the two magnet core blocks 11 correspond to each other and that the shaft holes 14 and the magnet holes 15 thereof respectively correspond to each other. In this way, the rotor 10 is formed. At this time, the two magnet core blocks 11 are stacked such that the first end surfaces A1, B1 on the exposing sides of the magnets 30 in the two magnet core blocks 11 constitute the end surfaces at both of the ends in the axial direction of the rotor 10. The two magnet core blocks 11 are fixed and integrated in this state. For example, outer peripheries of the two magnet core blocks 11 are fixed by welding as a fixing means. As welding, TIG welding, laser welding, or electron beam welding is used, for example.

Noted that, in order to fix the two magnet core blocks 11, instead of or in addition to welding, a through hole that penetrates in the axial direction may be formed at a position that differs from the positions of the shaft hole 14 and the magnet holes 15 in each of the core block elements 12. In this configuration, the positions of the through holes of the two core block elements 12 are arranged to correspond to each other, and a coupling pin as a fixing means is fitted in the two through holes. In this way, the two core block elements 12 are fixed. In addition, the through holes may be filled with the resin member in a state where the through holes of the two core block elements 12 correspond to each other.

According to the method for manufacturing the rotor 10 described above, the first end surfaces A1, B1 on the exposing sides of the magnets 30 in the two magnet core blocks 11 constitute the end surfaces at each of the ends of the rotor 10 in the axial direction. Portions near second end surfaces A2, B2 as the ends on the resin injection sides of the magnet core blocks 11 are disposed at opposing ends of the two magnet core blocks 11 that are on an inner side of the rotor 10 in the axial direction. In each of the magnet core blocks 11, the end surface of the magnet 30 in the magnet hole 15 is covered with the resin portion 31 in each portion of the second end surfaces A2, B2. Accordingly, in a state before the magnet core blocks 11 are stacked, the resin portions 31 are largely exposed on sides of the second end surfaces A2, B2.

Meanwhile, even in the case where excess stress is generated in the resin portions 31 near the second end surfaces A2, B2 due to an excess temperature change during use of the rotor 10 or rotation of the rotor 10, the resin portions 31 are enclosed in the rotor 10. Thus, cracking of the resin portions 31 near the second end surfaces A2, B2 is less likely to occur. In addition, even in the case where cracking occurs to the resin portions 31 near the second end surfaces A2, B2, the resin near the second end surfaces A2, B2 is not scattered externally. It is because the second end surfaces A2, B2 are disposed on the inner side of the rotor 10 in the axial direction. Furthermore, the end surfaces of the magnets 30 are exposed at both of the ends (near the first end surfaces A1, B1) of the rotor 10 in the axial direction. Accordingly, because an area of an exposed portion of each of the resin portions 31 at each of the ends of the rotor 10 is small, cracking of the resin in the portion at each of the ends is less likely to occur. In this way, it is possible to suppress failure of fixing the magnet 30 to the core block element 12 by the resin portion 31 from occurring. In addition, as shown in FIG. 1, in a state where the rotary electric machine 50 is formed, it is possible to suppress performance degradation of peripheral parts, which is caused by scattering of the resin portion 31 during the rotation of the rotor 10, from occurring. Therefore, reliability of the rotary electric machine 50 can be improved, and stable performance thereof can also be secured.

Furthermore, during formation of each of the magnet core blocks 11, the only one magnet 30 is inserted in each of the magnet holes 15 from the above, and the resin is injected from above the magnet 30 and is solidified. Due to such a simple work, the magnet 30 can easily be fixed. Accordingly, each of the magnet core blocks 11 can easily be formed, and thus a significant increase of manufacturing cost of the rotor 10 can be suppressed. As a result, the rotor 10, which provides favorable productivity and suppresses scattering of the resin portion 31, can be realized.

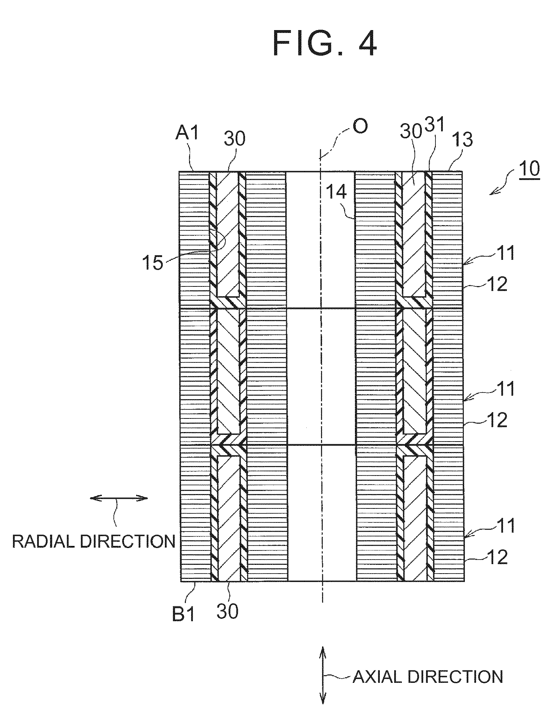

FIG. 4 is a cross-sectional view of the rotor 10 manufactured by another example of the method for manufacturing of the embodiment. The rotor 10 is formed by stacking the three magnet core blocks 11 and fixing the adjacent magnet core blocks 11. In a configuration of the other example, the three magnet core blocks 11 are integrated such that, in the two magnet core blocks 11 that are disposed at both of the ends of the rotor 10 in the axial direction, the first end surfaces A1, B1 on the exposing sides of the magnets 30 constitute the end surfaces at both of the ends of the rotor 10 in the axial direction. The rest of the configuration and the action are the same as the configuration and the action shown in FIG. 1 to FIG. 3. The rotor 10 may be configured that four or more of the plural magnet core blocks 11 are integrated. Also, in such a configuration, the plural magnet core blocks 11 are integrated such that, in the two magnet core blocks 11 that are disposed at both of the ends of the rotor 10 in the axial direction, the end surfaces on the exposing sides of the magnets 30 constitute the end surfaces at both of the ends of the rotor 10 in the axial direction.

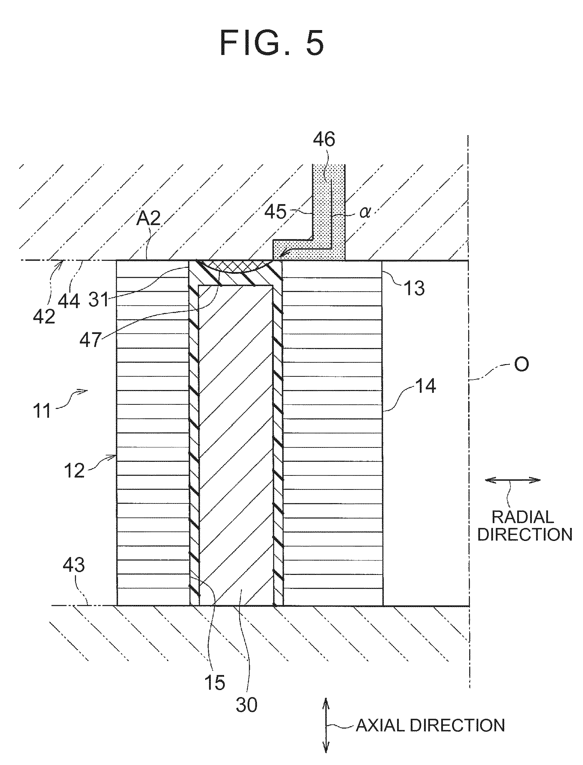

FIG. 5 is a cross-sectional view of a half portion of the magnet core block 11 that is formed in a process of forming the magnet core block 11 in the other example of the method for manufacturing the rotor of the embodiment. In the magnet core block 11 shown in FIG. 5, in a state after being taken out of the resin injection device 42, at the end (an upper end in FIG. 5) on the resin injection side, the surface of the resin portion 31 in the magnet hole 15 is exposed on the second end surface A2 side that is the resin injection side. In the surface of the resin portion 31 that is exposed on the second end surface A2 side, an inner portion apart from an inner wall surface of the magnet hole 15 is recessed inward (to a lower side in FIG. 5) in the axial direction from the second end surface A2 of the core block element 12.

In order to form such a magnet core block 11, in the process of forming the magnet core block 11, the molten resin 46 is injected into the magnet hole 15 from above the magnet 30 on the second end surface A2 side and is solidified. At this time, the molten resin 46 is solidified near the second end surface A2 as the end on the resin injection side of the magnet core block 11 such that, in the surface of the resin portion 31 in the magnet hole 15, the inner portion apart from the inner wall surface of the magnet hole 15 is recessed inward in the axial direction from the end surface of the core block element 12. For example, an insertion portion 47 that is shown as an crosshatched portion in FIG. 5 is formed in advance in a bottom surface of the upper mold 44 of the resin injection device 42 that is used in the process of forming the magnet core block 11. A lower surface of this insertion portion 47 is in a spherical shape, for example. In the process of forming the magnet core block 11, the insertion portion 47 of the upper mold 44 is inserted into each of the magnet holes 15 from the above. The insertion portion 47 is controlled such that a gap is formed between the insertion portion 47 and an inner circumferential surface at an opening end of the magnet hole 15 in a state where a tip of the insertion portion 47 is inserted in the magnet hole 15. In this way, the molten resin 46 that is pushed out by the plunger (not shown) in an arrow α direction in FIG. 5 can be injected into the magnet hole 15 through this gap.

According to the above configuration, the productivity of the rotor 10 can further be improved. More specifically, in a state before the plural magnet core blocks 11 are stacked and after the magnet core blocks 11 are formed, the resin portion 31 near the second end surface A2 as the end on the resin injection side of the magnet core block 11 is possibly expanded due to the temperature increase. In the above configuration, even in the case where the resin portion 31 is expanded, just as described, it is possible to suppress the resin portion 31 from being projected from the second end surface A2 on the resin injection side of the magnet core block 11. In this way, in the case where the second end surface A2 on the resin injection side is disposed on the inner side of the rotor 10 in the axial direction during stacking of the magnet core blocks 11, it is possible to suppress a situation where the resin portion 31 hinders stacking of the magnet core blocks 11. Therefore, the productivity of the rotor 10 can further be improved. The rest of the configuration and the action are the same as the configuration and the action shown in FIG. 1 to FIG. 3. Noted that the configuration of this example may be combined with the configuration in FIG. 4.

Noted that the case where each of the core block elements 12 for forming the rotor 10 is formed of the stacked body of the core plates 13 is described above. Meanwhile, each of the core block elements 12 may be formed in a shape that has the shaft hole 14 at the center and the plural magnet holes 15 therearound by pressurizing and molding a resin binder and magnetic material powder.

In addition, a locking groove that extends in the axial direction may be formed in a circumferential portion of an inner circumferential surface of the shaft hole 14 in each of the core block elements 12. In a state where the locking grooves of the core block elements 12 correspond to each other in the circumferential direction, the rotary shaft may be inserted in the shaft hole 14, and a key that is locked in a circumferential portion of an outer circumferential surface of the rotary shaft may be locked in each of the locking grooves. According to such a configuration, displacement of each of the core block elements 12 in the circumferential direction can further stably be suppressed.

Furthermore, when being stacked, each of the core block elements 12 may be disposed such that the position of the magnet 30 is displaced to one side in the circumferential direction toward one side in the axial direction. According to such a configuration, similar to a configuration that the magnet 30 is skewed in the circumferential direction with respect to the axial direction in the rotor 10, a rotary operation of the rotor 10 can be smoothed during use of the rotary electric machine 50.

Moreover, the case where the rotor 10 is formed by stacking and integrating the plural magnet core blocks 11 by welding or the like before the rotor 10 is fixed to the rotary shaft 51 (FIG. 1) is described above. Meanwhile, instead of this configuration, the magnet core blocks 11 may be assembled separately to the rotary shaft 51 such that the rotary shaft 51 is press-fitted on the inner side of the magnet core blocks 11, and may be stacked. In this way, the plural magnet core blocks 11 may be integrated via the rotary shaft 51. In this configuration, the rotary shaft 51 is the fixing means of the plural magnet core blocks 11.

This embodiment will be summarized below. This embodiment includes: the process of forming the core block element 12 that is made of the magnetic material and has the magnet holes 15; the process of inserting the magnet 30 in each of the magnet holes 15; the process of forming the magnet core block 11 by injecting the molten resin 46 into the magnet holes 15 from the above, solidifying the molten resin 46, and thereby integrating the core block element 12 and the magnets 30; and the process of forming the rotor 10 by stacking and integrating the plural magnet core blocks 11, the process of forming the rotor 10 further including the process of integrating the plural magnet core blocks 11 such that, of the plural magnet core blocks 11, the end surfaces A1, B1 on the exposing sides of the magnets constitute the end surfaces at both of the ends of the rotor 10 in the axial direction in the two magnet core blocks 11 that are disposed at both of the ends in the axial direction.

The method for manufacturing the rotary electric machine rotor according to the present invention may include: the process of forming the core block element that is made of the magnetic material and has the shaft hole at the center and the plural magnet holes around the shaft hole; the process of inserting the magnet, the axial length of which is shorter than that of the magnet hole, in each of the magnet holes; the process of forming the magnet core block by injecting the molten resin into the magnet holes from above the magnets, solidifying the molten resin, and thereby integrating the core block element and the magnets, the process of forming the magnet core block further including the process of forming the magnet core block in which the end surface of each of the magnets is exposed at the opposite end from the resin injection side; and the process of forming the rotor by stacking and integrating the plural magnet core blocks such that the center axes thereof correspond to each other, the process of forming the rotor further including the process of integrating the plural magnet core blocks such that, of the plural magnet core blocks, the end surfaces on the exposing sides of the magnets constitute the end surfaces at both of the ends of the rotor in the axial direction in the two magnet core blocks that are disposed at both of the ends in the axial direction.

Summing up, the present invention relates to a method for manufacturing a rotary electric machine rotor includes: forming core block elements; inserting magnets in corresponding one of magnet holes; forming magnet core blocks by injecting a molten resin into each of the magnet holes from above the magnet, solidifying the molten resin, and thereby forming a resin portion so as to integrate each of the core block elements and the magnets, the molten resin is injected at a second end surface, and end surfaces of the magnets being exposed on a first end surface; forming a rotary electric machine rotor by stacking and integrating a plural magnet core blocks, the plural magnet core blocks being stacked such that the first end surfaces of two magnet core blocks that are disposed at both ends in an axial direction constitute end surfaces at both ends of the rotary electric machine rotor in the axial direction.

## Claims

1. A method for manufacturing a rotary electric machine rotor (10) comprising:
forming core block elements (12) that are made of a magnetic material, each of the core block elements (12) having a shaft hole (14) at the center and plural magnet holes (15) around the shaft hole (14);
inserting magnets (30) in corresponding one of the magnet holes (15), an axial length (L1) of each of the magnets (30) being preferably shorter than an axial length (L2) of each of the magnet holes (15);
forming magnet core blocks (11) by injecting a molten resin (46) into each of the magnet holes (15) from above the magnet (30), solidifying the molten resin (46), and thereby forming a resin portion (31) so as to integrate each of the core block elements (12) and the magnets (30), each of the magnet core blocks (11) having axial end surfaces that are a first end surface (A1; B1) and a second end surface (A2; B2), the first end surface (A1; B1) being on an opposite side from the second end surface (A2; B2), the molten resin (46) being injected at the second end surface (A2; B2), and end surfaces of the magnets (30) being exposed on the first end surface (A1; B1);
forming the rotary electric machine rotor (10) by stacking and integrating a plural magnet core blocks (11) such that center axes correspond to each other, the plural magnet core blocks (11) being stacked such that the first end surfaces (A1; B1) of two magnet core blocks (11) that are disposed at both ends in an axial direction constitute end surfaces at both ends of the rotary electric machine rotor (10) in the axial direction.

2. The method for manufacturing the rotary electric machine rotor (10) according to claim 1, wherein
the plural magnet core blocks (11) being stacked such that the second end surfaces (A2; B2) of the two magnet core blocks (11) that are disposed at both ends in an axial direction are disposed on an inner side of the rotary electric machine rotor (10) in the axial direction.

3. The method for manufacturing the rotary electric machine rotor (10) according to claim 1 or 2, wherein
each resin portion (31) in each of the magnet holes (15) has a resin surface at the second end surface (A2; B2).

4. The method for manufacturing the rotary electric machine rotor (10) according to claim 3, wherein
the resin surface has an inner portion that is apart from a wall surface of the each of the magnet holes (15), and
the inner portion is recessed inward in an axial direction from the second end surface (A2; B2) of the core block element (12).

5. The method for manufacturing a rotary electric machine rotor (10) according to any one of claims 1 to 4, further comprising:
forming each core block element (12) by stacking plural core plates (13), preferably being made of a steel sheet as the magnetic material.

6. The method for manufacturing a rotary electric machine rotor (10) according to claim 5, further comprising:
forming each core plate (13) by punching the steel sheet, preferably having a thickness of 0.5 mm or smaller, in an annular shape; and
forming each core plate (13) with a shaft hole at the center and the plural peripheral magnet holes by the punching.

7. The method for manufacturing a rotary electric machine rotor (10) according to claim 6, further comprising:
forming the shaft hole (14) of the core block element (12) by connecting the shaft holes of the plural core plates (13) in the axial direction; and
forming the plural magnet holes (15) of the core block element (12) by connecting the plural magnet holes of the plural core plates (13) in the axial direction.

8. The method for manufacturing a rotary electric machine rotor (10) according to any of claims 1 to 7, further comprising:
integrating the magnet (30) and the core block element (12) by filling a portion above the magnet (30) and a periphery of the magnet (30) in the magnet hole (15) with the resin portion (31).

9. A rotary electric machine rotor (10) comprising:
plural magnet core blocks (11) that are stacked and integrated such that center axes correspond to each other, wherein
each of the magnet core blocks (11) is formed by core block elements (12) and magnets (30), the core block elements (12) being made of a magnetic material and each of the core block elements (12) having a shaft hole (14) at the center and plural magnet holes (15) around the shaft hole (14), the magnets (30) being inserted in corresponding one of the magnet holes (15) and an axial length (L1) of each of the magnets (30) being shorter than an axial length (L2) of each of the magnet holes (15);
a portion above the magnet (30) and a periphery of the magnet (30) in the magnet hole (15) are filled with a resin portion (31);
each of the magnet core blocks (11) has axial end surfaces that are a first end surface (A1; B1) and a second end surface (A2; B2), the first end surface (A1; B1) being on an opposite side from the second end surface (A2; B2), the molten resin (46) being injected at the second end surface (A2; B2), and end surfaces of the magnets (30) being exposed on the first end surface (A1; B1); and
the plural magnet core blocks (11) are stacked such that the first end surfaces (A1; B1) of two magnet core blocks (11) that are disposed at both ends in an axial direction constitute end surfaces at both ends of the rotary electric machine rotor (10) in the axial direction.
